# EUROPÄISCHE PATENTANMELDUNG

(11) **EP 1 050 838 A2**
(43) Veröffentlichungstag der Anmeldung: **08.11.2000**
(21) Anmeldenummer: 00109515.7
(22) Anmeldetag: 04.05.2000
(51) Int. Cl.: G06K 7/00

(54) **Kartenlesevorrichtung**

(30) Priorität: 06.05.1999 DE 19921022
(71) Anmelder: Tyco Electronics Logistics AG, 9323 Steinach / SG (CH)
(72) Erfinder: De Winter, Stefaan, 9230 Wetteren (BE)
(74) Vertreter: Hirsch, Peter

(57) **Zusammenfassung**

Es wird eine Kartenlesevorrichtung mit einem Kontaktträgerteil und einem Kartenträgerteil beschrieben. Die Kartenlesevorrichtung zeichnet sich dadurch aus, daß das Kartenträgerteil als ein auf das Kontaktträgerteil aufgesetztes oder aufsetzbares Teil ausgebildet ist, und das Kartenträgerteil vom Kontaktträgerteil abnehmbar ist und/oder daß im Kartenträgerteil ein federndes Element vorgesehen ist, durch welches eine in das Kartenträgerteil eingesetzte Karte zu der den Kontaktlementen des Kontaktträgerteils zuzuwendenden Seite des Kartenträgerteils hin gedrückt wird.

## Beschreibung

Die vorliegende Erfindung betrifft eine Vorrichtung gemäß den Oberbegriffen der Patentansprüche 1 und 2, d.h. eine Kartenlesevorrichtung zum Lesen einer Karte, mit einem Kartenträgerteil zur Aufnahme der zu lesenden Karte, und mit einem Kontaktträgerteil mit Kontaktelementen zum Kontaktieren der zu lesenden Karte.

Derartige Kartenlesevorrichtungen sind beispielsweise die in Mobiltelefonen verwendeten Vorrichtungen zum Entgegennehmen und/oder Weitergeben von durch eine oder für eine sogenannte SIM-Karte bzw. ein sogenanntes SIM-Modul bereitgestellten Informationen.

Eine solche Kartenlesevorrichtung ist beispielsweise aus der DE 196 38 648 A1 bekannt.

Kartenlesevorrichtungen, die aus einem Kontaktträgerteil und einem Kartenträgerteil bestehen, sind in der Regel einfach zu bedienen und funktionieren zuverlässig. Dies gilt jedoch nicht in allen Fällen. Insbesondere bei an schlecht zugänglichen Stellen eingebauten Kartenlesevorrichtungen und/oder unter rauhen Einsatzbedingungen kann sich die Bedienung und die Zuverlässigkeit solcher und anderer Kartenlesevorrichtungen unter Umständen als problematisch erweisen.

Der vorliegenden Erfindung liegt daher die Aufgabe zugrunde, die Kartenlesevorrichtung gemäß dem Oberbegriff der Patentansprüche 1 und 2 derart weiterzubilden, daß diese unter allen Umständen einfach bedienbar ist und zuverlässig funktioniert.

Diese Aufgabe wird erfindungsgemäß durch die im kennzeichnenden Teil des Patentanspruchs 1 beanspruchten Merkmale und/oder durch die im kennzeichnenden Teil des Patentanspruchs 2 beanspruchten Merkmale gelöst.

Demnach ist vorgesehen,
- daß im Kartenträgerteil ein federndes Element vorgesehen ist, durch welches eine in das Kartenträgerteil eingesetzte Karte zu der den Kontaktelementen des Kontaktträgerteils zuzuwendenden Seite des Kartenträgerteils hin gedrückt wird (kennzeichnender Teil des Patentanspruchs 1) bzw.
- daß das Kartenträgerteil als ein auf das Kontaktträgerteil aufgesetztes oder aufsetzbares Teil ausgebildet ist, und daß das Kartenträgerteil vom Kontaktträgerteil abnehmbar ist (kennzeichnender Teil des Patentanspruchs 2).

Dadurch, daß eine in das Kartenträgerteil eingesetzte Karte durch ein federndes Element in eine bestimmte Richtung gedrückt wird, läßt sich die Karte bereits beim Einsetzen in das Kartenträgerteil sehr einfach in einer bestimmten Position (vorzugsweise ihrer beim Gelesenwerden einzunehmenden Lesestellung) arretieren.

Durch das Drücken der Karte zum Kontaktträgerteil hin kann erreicht werden, daß die Kontaktelemente der Karte unter allen Umständen (auch bei unterschiedlich dicken Karten) jeweils an einer ganz bestimmten Stelle zu liegen kommen. Dies und ferner die Tatsache, daß die bestimmte Stelle eine maximal weit außen am Kartenträgerteil liegende Stelle sein kann, ermöglichen es, daß zwischen den Kontaktelementen des Kontaktträgerteils und der Karte unter allen Umständen eine besonders gute und zuverlässige Verbindung zustande kommen kann. Einer solchen Verbindung können selbst Stöße und Erschütterungen nichts anhaben.

Dadurch, daß das Kartenträgerteil vom Kontaktträgerteil abnehmbar ist, kann eine in das Kartenträgerteil einzusetzende Karte unabhängig vom Einbauort des Kartenlesevorrichtung schnell und einfach in das Kartenträgerteil eingesetzt und auf den richtigen Sitz hin überprüft werden.

Die positiven Effekte der in den Patentansprüchen 1 und 2 beanspruchten Merkmale erweisen sich als besonders vorteilhaft, wenn die Kartenlesevorrichtung zum gleichzeitigen Lesen mehrerer Karten ausgelegt ist, also mehrere Karten im Kartenträgerteil in einer eine gleichzeitige Kontaktierung der Karten gestattenden Art und Weise unterzubringen sind.

Derartige Kartenlesevorrichtungen sind somit unter allen Umständen denkbar einfach zu bedienen und mit größtmöglicher Zuverlässigkeit betreibbar.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1: eine perspektivische Ansicht der nachfolgend näher beschriebenen Kartenlesevorrichtung,
- Figur 2: eine perspektivische Ansicht eines Kartenträgerteils der Kartenlesevorrichtung gemäß Figur 1,
- Figur 3: eine andere Ansicht des Kartenträgerteils gemäß Figur 2,
- Figur 4: das Kartenträgerteil gemäß Figur 3 mit darin eingesetzten Karten, und
- Figur 5: eine perspektivische Ansicht eines Kontaktträgerteils der Kartenlesevorrichtung gemäß Figur 1.

Die im folgenden beschriebene Kartenlesevorrichtung ist eine zum Lesen von sogenannten Multi-Media-Karten ausgelegte Kartenlesevorrichtung. Multi-Media-Karten sind sehr hohe Speicherkapazitäten aufweisende Halbleiterspeicherkarten zum Speichern von Daten, wobei die Daten beliebiger Art sein können (Software, Texte, Audiodaten, Bilddaten, Videodaten etc.). Es sei jedoch bereits an dieser Stelle darauf hingewiesen, daß die Kartenlesevorrichtung auch zum Lesen beliebiger anderer Karten wie beispielsweise der "normalen" Chipkarten wie sie z.B. für Telefonkarten verwendet werden oder der sogenannten SIM-Karten für Mobiltelefone ausgelegt sein kann.

Die Multi-Media-Karten, für welche die betrachtete Kartenlesevorrichtung vorgesehen ist, weisen eine Länge von 32 mm, eine Breite von 24 mm und eine Dicke zwischen 1,3 und 1,4 mm auf. Selbstverständlich besteht hierauf in keinster Weise eine Einschränkung. Die elektrischen Anschlüsse (Kontaktelemente) der Multi-Media-Karten sind als Oberflächenkontakte ausgebildet, die entlang des Randes der Karten angeordnet sind. Auch dies ist nicht zwingend erforderlich.

Die beschriebene Kartenlesevorrichtung kann bis zu drei, d.h. eine, zwei oder drei Multi-Media-Karten gleichzeitig aufnehmen und lesen. Auch hierauf besteht keine Einschränkung. Die Anzahl der gleichzeitig aufnehmbaren und lesbaren Karten kann beliebig viel größer oder kleiner sein. Die Kartenlesevorrichtung kann auch zum Aufnehmen und Lesen von nur einer einzigen Karte ausgelegt sein.

Unter dem "Lesen einer Karte" möge ganz allgemein das Entgegennehmen und/oder Weiterleiten von durch eine oder für eine Karte bestimmte Information verstanden werden.

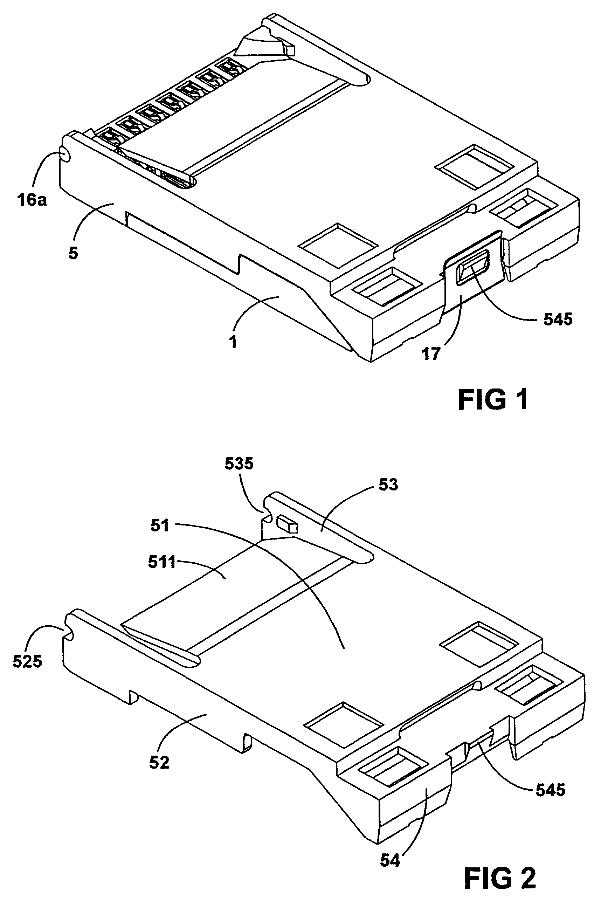

Die beschriebene Kartenlesevorrichtung ist (ohne darin eingesetzte Karten) in der Figur 1 dargestellt. Sie besteht aus einem Kontaktträgerteil 1 und einem auf diesen aufgesetzten Kartenträgerteil 5.

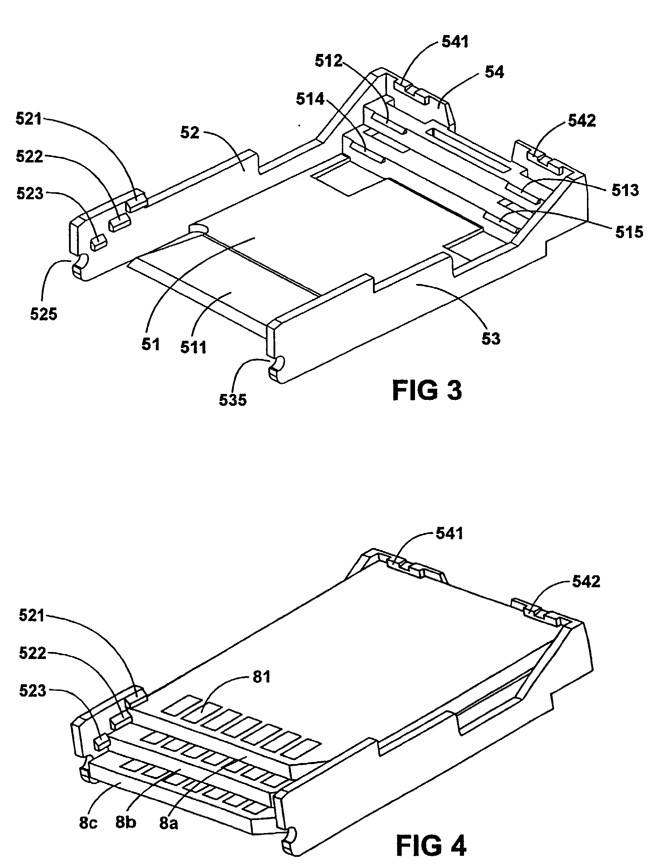

Die durch die Kartenlesevorrichtung zu lesenden Karten sind eine erste Karte 8a, eine zweite Karte 8b und/oder eine dritte Karte 8c. Die Karten 8a bis 8c sind identisch ausgebildet und weisen mit dem Bezugszeichen 81 bezeichnete Kontaktelemente auf (siehe Figur 4).

Das Kontaktträgerteil 1 der Kartenlesevorrichtung dient, wie die Bezeichnung schon andeutet, zum Kontaktieren der zu lesenden Karten 8a bis 8c; das Kartenträgerteil 5 dient zur Aufnahme der zu lesenden Karten 8a bis 8c.

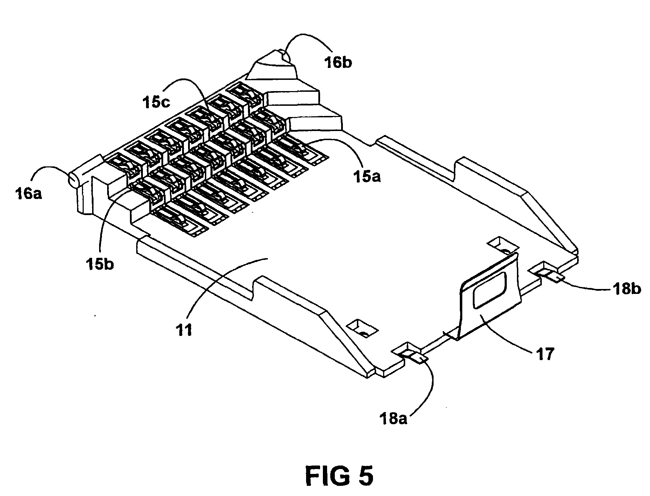

Das Kontaktträgerteil 1 und das Kartenträgerteil 5 sind voneinander trennbare Einzelteile. Die zu lesenden Karten 8a bis 8c werden in das in den Figuren 2 bis 4 genauer dargestellten Kartenträgerteil 5 eingesetzt und zusammen mit diesem auf das in Figur 5 genauer dargestellte Kontaktträgerteil 1 aufgesetzt.

Das Kontaktträgerteil 1 ist dazu ausgelegt, elektrisch und mechanisch mit einer in den Figuren nicht gezeigten Leiterplatte verbunden zu werden. Es besteht aus einem Isolierkörper 11 und einer Vielzahl von Kontaktelementen 15a, 15b und 15c zum Kontaktieren der auf den zu lesenden Karten 8a bis 8c vorgesehenen Kontaktelementen 81.

Wie aus der Figur 5 ersichtlich ist, sind die Kontaktelemente 15a bis 15c des Kontaktträgerteils 1 in drei nebeneinander liegenden Reihen angeordnet, wobei die durch mehrere Kontaktelemente 15a gebildete erste (gemäß der Darstellung in der Figur 5 rechte) Kontaktelemente-Reihe zum Kontaktieren der ersten Karte 8a, die durch mehrere Kontaktelemente 15b gebildete zweite (gemäß der Darstellung in der Figur 5 mittlere) Kontaktelemente-Reihe zum Kontaktieren der zweiten Karte 8b, und die durch mehrere Kontaktelemente 15c gebildete dritte (gemäß der Darstellung in der Figur 5 linke) Kontaktelemente-Reihe zum Kontaktieren der dritten Karte 8c vorgesehen sind.

Die Kontaktelemente-Reihen sind in einem treppenartigen Abschnitt des Kontaktträgerteils 1 vorgesehen. Dabei liegt die erste (rechte) Kontaktelemente-Reihe auf dem untersten Höhenniveau, die zweite (mittlere) Kontaktelemente-Reihe auf dem mittleren Höhenniveau, und die dritte (linke) Kontaktelemente-Reihe auf dem obersten Höhenniveau. Die jeweiligen Höhenniveau-Unterschiede (Stufenhöhen) entsprechen in etwa der Dicke einer der zu lesenden Karten 8a bis 8c. Der Abstand zwischen benachbarten Kontaktelemente-Reihen (Stufentiefe) entspricht in etwa dem Ausmaß, in dem zwei übereinander angeordnete Karten seitlich zu versetzen sind, damit ihre Kontaktelemente 81 frei zugänglich sind (damit die Kontaktelemente einer Karte nicht durch eine darüber oder darunter angeordnete Karte verdeckt sind). Der Versatz ist im betrachteten Beispiel relativ gering, weil die Kontaktelemente 81 der Karten 8a bis 8c in Randnähe derselben angeordnet sind.

Die wie beschrieben oder ähnlich angeordneten Kontaktelemente des Kontaktträgerteils ermöglichen es, gleichzeitig mit mehreren Karten in Kontakt zu kommen.

Die zu lesenden Karten müssen hierzu seitlich versetzt übereinandergestapelt sein. Ein aus bis zu drei seitlich versetzt übereinandergestapelten Karten bestehender Kartenstapel ist in dem bereits erwähnten Kartenträgerteil 5 unterbringbar.

Das Kartenträgerteil 5 ist so aufgebaut, daß es zusammen mit den darin untergebrachten Karten (dem darin untergebrachten Kartenstapel) wie ein Deckel auf das Kontaktträgerteil 1 aufsetzbar ist. Im bestimmungsgemäß auf das Kontaktträgerteil 1 aufgesetzten Zustand des Kartenträgerteils 5 kommen die Kontaktelemente der ersten der darin eingesetzten Karten (der obersten Karte 8a des Kartenstapels) auf der ersten (untersten) Kontaktelemente-Reihe, die Kontaktelemente der zweiten der darin eingesetzten Karten (der mittleren Karte 8b des Kartenstapels) auf der zweiten (mittleren) Kontaktelemente-Reihe, und die Kontaktelemente der dritten der darin eingesetzten Karten (der untersten Karte 8c des Kartenstapels) auf der dritten (untersten) Kontaktelemente-Reihe zu liegen.

Wie insbesondere aus den Figuren 2 und 3 ersichtlich ist, ist das Kartenträgerteil 5 eine einen Boden 51, eine erste Seitenwand 52, eine zweite Seitenwand 53, und eine Rückwand 54 umfassende rahmenartige Konstruktion.

Der vom Boden 51, den Seitenwänden 52 und 53 und der Rückwand 54 umrahmte Bereich weist eine der Breite des Kartenstapels entsprechende Breite, eine der maximalen Länge des Kartenstapels entsprechende Länge, und eine der maximalen Höhe des Kartenstapels entsprechende Höhe auf.

Der Boden 51 ist im Bereich der Rückwand 54 stufenförmig ausgebildet, wobei die Höhe und die Tiefe der Stufen der Höhe und Tiefe der im Kontaktträgerteil 1 ausgebildeten Stufen entsprechen. Am entgegengesetzten Ende des Bodens 51 ist dieser als eine elastisch federnde Zunge 511 ausgebildet, durch welche in das Kartenträgerteil 5 (zwischen die Seiten- und Rückwände desselben) eingelegte Karten vom Boden 51 weg gegen von den Seiten- und Rückwänden und den Stufen nach innen ragende Vorsprünge gedrückt werden.

Die an den Seitenwänden 52, 53, der Rückwand 54, und den Stufen ausgebildeten Vorsprünge sind in den Figuren mit den Bezugszeichen 521, 522, 523 (Vorsprünge an den Seitenwänden 52, 53), 541, 542 (Vorsprünge an der Rückwand 54), und 512, 513, 514, 515 (Vorsprünge an den Stufen) bezeichnet. Sie dienen als frontale und/oder seitliche Anschläge für die durch die Zunge 511 vom Boden 51 weggedrückten Karten 8a, 8b, 8c.

Die erste (in der Darstellung gemäß Figur 4 oben liegende) Karte 8a des Kartenstapels
- kommt im bestimmungsgemäß in das Kartenträgerteil 5 eingesetzten Zustand mit ihrem einen Ende zwischen der oberen Stufe und den Vorsprüngen 541 und 542 der Rückwand 54 zu liegen,
- wird am entgegengesetzten Ende (über die zweite Karte 8b und die dritte Karte 8c) durch die Zunge 511 gegen die Vorsprünge 521 der Seitenwände 52 und 53 gedrückt, und
- ist in diesem Zustand durch die Rückwand 54 und die Vorsprünge 522 der Seitenwände 52 und 53 gegen ein seitliches Verschieben gesichert.

Die zweite (in der Darstellung gemäß Figur 4 in der Mitte liegende) Karte 8b des Kartenstapels
- kommt im bestimmungsgemäß in das Kartenträgerteil 5 eingesetzten Zustand mit ihrem einen Ende zwischen der unteren Stufe und den Vorsprüngen 512 und 513 der oberen Stufe zu liegen,
- wird am entgegengesetzten Ende (über die dritte Karte 8c) durch die Zunge 511 gegen die Vorsprünge 522 der Seitenwände 52 und 53 und/oder gegen die darüber liegende erste Karte 8a gedrückt, und
- ist in diesem Zustand durch die obere Stufe und die Vorsprünge 523 der Seitenwände 52 und 53 gegen ein seitliches Verschieben gesichert.

Die dritte (in der Darstellung gemäß Figur 4 unten liegende) Karte 8c des Kartenstapels
- kommt im bestimmungsgemäß in das Kartenträgerteil 5 eingesetzten Zustand mit ihrem einem Ende zwischen dem Boden 51 und den Vorsprüngen 514 und 515 der unteren Stufe zu liegen, und
- wird am entgegengesetzten Ende durch die Zunge 511 gegen die Vorsprünge 523 der Seitenwände 52 und 53 und/oder gegen die darüber liegende zweite Karte 8b gedrückt.

Die Karten 8a bis 8c werden von der offenen Seite des Kartenträgerteils 5 her in dieses eingeschoben und schnappen dabei in ihre bestimmungsgemäße Stellung, welches vorzugsweise zugleich die beim Gelesenwerden einzunehmende Lesestellung ist, ein.

Der Zustand, in welchem die Karten 8a, 8b und 8c wie beschrieben in das Kartenträgerteil 5 eingesetzt sind, ist in Figur 4 veranschaulicht. In diesem Zustand sind die Karten zuverlässig gegen ein Verrutschen oder Verschieben innerhalb des Kartenträgerteils 5 gesichert; sie lassen sich bereits beim Einsetzen in das Kartenträgerteil 5 arretieren und können sich von da an unter normalen Umständen weder in horizontaler noch in vertikaler Richtung bewegen.

Das Einsetzen der Karten 8a, 8b, und 8c in das Kartenträgerteil 5 und das Entfernen derselben aus diesem läßt sich problemlos bewerkstelligen, denn das Kartenträgerteil 5 ist ein vom Kontaktträgerteil abnehmbares, separates Einzelteil und mithin unter allen Umständen einfach handhabbar. Die Entfernbarkeit des Kartenträgerteils 5 vom Kontaktträgerteil 1 ermöglicht darüber hinaus eine visuelle Kontrolle des Sitzes der Karten 8a bis 8c innerhalb des Kartenträgerteils 5.

Das Kartenträgerteil 5 läßt sich zusammen mit den bereits in der Lesestellung arretierten Karten 8a bis 8c auf das Kontaktträgerteil 1 aufsetzen und wie ein Klappdeckel relativ zu diesem schwenken. Beim Zusammenklappen kommen am Kontaktträgerteil 1 und am Kartenträgerteil 5 vorgesehene Rastelemente in Eingriff und halten das Kontaktträgerteil 1 und das Kartenträgerteil 5 in einer das Lesen der darin enthaltenen Karten gestattenden Relativlage zusammen.

Das Kontaktträgerteil 1 weist hierzu an dem Ende, an welchem die Kontaktelemente-Reihen vorgesehen sind, nach außen ragende Zapfen 16a und 16b, und am gegenüberliegenden Ende einen Rasthaken 17 auf. Das Kartenträgerteil 5 weist hierzu in den freien Endabschnitten der Seitenwände 52 und 53 halbkreisförmige Aussparungen 525 und 535, und an der Außenseite der Rückwand eine Rastnase 545 auf.

Die freien Endabschnitte der Seitenwände 52 und 53 sind durch die halbkreisförmigen oder bei Bedarf auch anders formbaren Aussparungen 525 und 535 gabelförmig ausgebildet und dazu ausgelegt, auf die Zapfen 16a und 16b des Kontaktträgerteils aufgesetzt zu werden. Die Zapfen 16a und 16b und die Aussparungen 525 und 535 sind dabei so positioniert und dimensioniert, daß die Aussparungen 525 und 535 ohne oder mit vernachlässigbarem Spiel auf die Zapfen 16a und 16b aufsetzbar sind.

Das Kartenträgerteil 5 wird mit den darin eingesetzten Karten 8a bis 8c so auf das Kontaktträgerteil 1 aufgesetzt, daß die Aussparungen 525 und 535 auf den Zapfen 16a und 16b zu liegen kommen. Die Aussparungen 525 und 535 und die Zapfen 16a und 16b entfalten im Zusammenwirken eine scharnierartige Wirkung, so daß das Kartenträgerteil 5 und das Kontaktträgerteil 1 um die Zapfen 16a und 16b relativ zueinander geschwenkt werden können. Schwenkt man das Kartenträgerteil 5 zum Kontaktträgerteil 1 hin, so treffen schließlich der Rasthaken 17 des Kontaktträgerteils 1 und die Rastnase 545 des Kartenträgerteils 5 aufeinander und verrasten aneinander. In der dann eingenommenen Stellung von Kontaktträgerteil 1 und Kartenträgerteil 5 werden die Kontaktelemente 81 der Karten 8a, 8b und 8c auf die Kontaktelemente 15a bis 15c des Kontaktträgerteils 1 gedrückt, wodurch eine zuverlässige und auch durch Erschütterungen oder Vibrationen nicht unterbrechbare elektrische Verbindung zustande kommt.

Beim Lösen der Verriegelung zwischen Kontaktträgerteil 1 und Kartenträgerteil 5 wird das Kartenträgerteil durch die (elastisch federnden) Kontaktelemente 15a bis 15c des Kontaktträgerteils 1 von diesem weggedrückt. Damit dies auch dann geschieht, wenn im Kartenträgerteil 5 keine Karten eingesetzt sind, können im Kontaktträgerteil 1 und/oder im Kartenträgerteil 5 zusätzliche (Öffnungs-)Federn oder dergleichen vorgesehen werden. Im betrachteten Beispiel sind solche Zusatzfedern am Kontaktträgerteil 1 vorgesehen. Sie sind benachbart zum Rasthaken 17 vorgesehen und mit den Bezugszeichen 18a und 18b bezeichnet.

Wie beschrieben oder ähnlich ausgebildete Kartenlesevorrichtungen sind unter allen Umständen denkbar einfach zu bedienen und mit größtmöglicher Sicherheit betreibbar.

## Patentansprüche

1. Kartenlesevorrichtung zum Lesen einer Karte, mit einem Kartenträgerteil (5) zur Aufnahme der zu lesenden Karte (8a, 8b, 8c), und mit einem Kontaktträgerteil (1) mit Kontaktelementen (15a, 15b, 15c) zum Kontaktieren der zu lesenden Karte,
**dadurch gekennzeichnet,**
daß im Kartenträgerteil (5) ein federndes Element (511) vorgesehen ist, durch welches eine in das Kartenträgerteil eingesetzte Karte zu der den Kontaktelementen (15a, 15b, 15c) des Kontaktträgerteils (1) zuzuwendenden Seite des Kartenträgerteils hin gedrückt wird.

2. Kartenlesevorrichtung zum Lesen einer Karte, mit einem Kartenträgerteil (5) zur Aufnahme der zu lesenden Karte (8a, 8b, 8c), und mit einem Kontaktträgerteil (1) mit Kontaktelementen (15a, 15b, 15c) zum Kontaktieren der zu lesenden Karte,
**dadurch gekennzeichnet,**
daß das Kartenträgerteil (5) als ein auf das Kontaktträgerteil (1) aufgesetztes oder aufsetzbares Teil ausgebildet ist, und daß das Kartenträgerteil vom Kontaktträgerteil abnehmbar ist.

3. Kartenlesevorrichtung nach Anspruch 1 oder 2,
**dadurch gekennzeichnet,**
daß die Kartenlesevorrichtung zum gleichzeitigen Lesen mehrerer Karten (8a, 8b, 8c) ausgelegt ist.

4. Kartenlesevorrichtung nach Anspruch 3,
**dadurch gekennzeichnet,**
daß das Kartenträgerteil (5) zur Aufnahme von seitlich versetzt übereinander liegenden Karten (8a, 8b, 8c) ausgelegt ist.

5. Kartenlesevorrichtung nach einem der vorhergehenden Ansprüche,
**dadurch gekennzeichnet,**
daß das Kartenträgerteil (5) so auf das Kontaktträgerteil (1) aufsetzbar ist, daß das Kartenträgerteil und das Kontaktträgerteil relativ zueinander schwenkbar sind.

6. Kartenlesevorrichtung nach einem der vorhergehenden Ansprüche,
**dadurch gekennzeichnet,**
daß das Kontaktträgerteil (1) und das Kartenträgerteil (5) durch eine Rastverbindung miteinander verbindbar sind.

7. Kartenlesevorrichtung nach einem der vorhergehenden Ansprüche,
**dadurch gekennzeichnet,**
daß die in das Kartenträgerteil (5) eingesetzten Karten (8a, 8b, 8c) durch das federnde Element (511) in ihrer Lesestellung arretiert werden.

8. Kartenlesevorrichtung nach einem der vorhergehenden Ansprüche,
**dadurch gekennzeichnet,**
daß die in das Kartenträgerteil (5) eingesetzten Karten (8a, 8b, 8c) durch das federnde Element (511) in ihre Lesestellung einrasten.

9. Kartenlesevorrichtung nach einem der vorhergehenden Ansprüche,
**dadurch gekennzeichnet,**
daß die in das Kartenträgerteil (5) eingesetzten Karten (8a, 8b, 8c) durch das federnde Element (511) gegen und zwischen am Kartenträgerteil vorgesehene Vorsprünge (512 bis 515, 521 bis 523, 541, 542) gedrückt wird.

10. Kartenlesevorrichtung nach einem der vorhergehenden Ansprüche,
**dadurch gekennzeichnet,**
daß das Kontaktträgerteil (1) und das Kartenträgerteil (5) derart ausgebildet sind, daß das Kartenträgerteil beim Lösen der Verbindung zwischen dem Kontaktträgerteil und dem Kartenträgerteil durch die Kontaktelemente (15a, 15b, 15c) des Kontaktträgerteils vom Kontaktträgerteil weggedrückt wird.

11. Kartenlesevorrichtung nach einem der vorhergehenden Ansprüche,
**dadurch gekennzeichnet,**
daß das Kontaktträgerteil (1) und/oder das Kartenträgerteil (5) mit zusätzlichen federnden Elementen (18a, 18b) versehen sind, durch welche das Kontaktträgerteil und das Kartenträgerteil auseinandergedrückt werden.
